# FASCICULE DE BREVET EUROPEEN

(11) **EP 4 169 142 B1**
(45) Date de publication et mention de la délivrance du brevet: **21.02.2024**
(21) Numéro de dépôt: 21737111.1
(22) Date de dépôt: 14.06.2021
(51) Int. Cl.: H02J 4/00, B64D 41/00, H02H 7/06, H02P 9/48, F01D 15/10, F01D 21/00, B64D 27/02

(54) **INSTALLATION ELECTROMECANIQUE D'AERONEF AVEC TURBOGENERATEUR, PROCEDE D'ARRET D'URGENCE D'UN TURBOGENERATEUR D'AERONEF ET PROGRAMME D'ORDINATEUR CORRESPONDANT**
ELEKTROMECHANISCHE INSTALLATION FÜR EIN FLUGZEUG MIT TURBOGENERATOR, VERFAHREN ZUM NOTHALTEN DES TURBOGENERATORS EINES FLUGZEUGS UND ENTSPRECHENDES COMPUTERPROGRAMM
ELECTROMECHANICAL INSTALLATION FOR AN AIRCRAFT WITH TURBOGENERATOR, EMERGENCY STOP METHOD FOR AN AICRAFT TURBOGENERATOR AND CORRESPONDING COMPUTER PROGRAM

(30) Priorité: 17.06.2020 FR 2006328
(43) Date de publication de la demande: 26.04.2023
(73) Titulaire: Safran Helicopter Engines, 64510 Bordes (FR)
(72) Inventeur: THIRIET, Romain Jean Gilbert, 77550 MOISSY-CRAMAYEL (FR); LEMAY, David Bernard Martin, 77550 MOISSY-CRAMAYEL (FR)
(74) Mandataire: Gevers & Orès
(86) Numéro de dépôt international: PCT/FR2021/051055
(87) Numéro de publication internationale: WO 2021/255371

(56) Documents cités:
- EP-A1- 2 197 082
- EP-A1- 3 522 362
- WO-A1-2011/069801
- WO-A1-2020/021214
- US-A1- 2008 079 401
- US-B1- 10 006 375

## Description

La présente invention concerne une installation électromécanique d'aéronef avec un turbogénérateur, un procédé d'arrêt d'urgence d'un turbogénérateur d'aéronef et un programme d'ordinateur correspondant.

On connait de l'état de la technique une installation électromécanique d'aéronef, du type comportant:
- un réseau électrique comportant des sous-réseaux électriques déconnectés électriquement les uns des autres et comportant chacun au moins un équipement électrique ;
- un turbogénérateur comportant :
   - une turbine à gaz,
   - une génératrice électrique à aimants permanents conçue pour être entraînée mécaniquement par la turbine à gaz et présentant des groupes de phases respectivement connectées aux sous-réseaux électriques, et
   - pour chaque groupe de phase, un dispositif d'isolement conçu pour déconnecter le groupe de phases de son sous-réseau électrique associé ;
- un dispositif de commande conçu pour détecter un court-circuit dans au moins un des groupes de phases, chaque groupe de phases dans lequel un court-circuit est détecté étant dit défectueux et chaque autre groupe de phases étant dit sain, et, en réponse à la détection du court-circuit, d'une part, pour commander le dispositif d'isolement associé à chaque groupe de phases défectueux pour déconnecter ce groupe de phases défectueux de son sous-réseau électrique associé et, d'autre part, pour commander un arrêt de la turbine à gaz.

Plus précisément, dans l'état de la technique, le dispositif de commande est conçu pour enclencher une procédure d'arrêt consistant à commander tous les dispositifs d'isolement pour déconnecter tous les groupes de phases, défectueux et sain(s), des sous-réseaux électriques. Cette déconnexion a pour but d'éviter la propagation de la panne en aval, vers le réseau électrique.

Un problème du système propulsif d'aéronef selon l'état de la technique est que, lorsqu'un court-circuit est détecté dans la génératrice électrique, la procédure d'arrêt est déclenchée mais la durée de décélération de la turbine à gaz est grande, par exemple de l'ordre de plusieurs dizaines de secondes. Pendant tout ce temps, la génératrice électrique est entraînée en rotation par la turbine à gaz et continue donc de fournir du courant. Il existe alors un risque très important d'échauffement local pouvant provoquer un départ de feu dans la génératrice électrique. Notamment, un isolant électrique et/ou thermique est généralement prévu dans la génératrice électrique et l'échauffement local peut lui faire prendre feu. Également, lorsque la génératrice électrique est refroidie à huile, cette dernière peut s'enflammer.

Dans la présente invention, on a cherché à résoudre ce problème de risque d'échauffement pouvant provoquer un départ de feu dans la génératrice électrique, en proposant un système propulsif d'aéronef qui permette de s'affranchir d'au moins une partie des problèmes et contraintes précités.

Par ailleurs, la demande PCT publiée sous le numéro WO 2020/021214 A1 décrit un système de génération de puissance électrique pour aéronef, la demande PCT publiée sous le numéro WO 2011/069801 A1 décrit une machine électrique, la demande de brevet US publiée sous le numéro US 2008/0079401 A1 décrit une architecture de machine électrique, la demande de brevet EP publiée sous le numéro EP 2 197 082 A1 décrit une machine électrique à aimant permanent régulé, la demande de brevet EP publiée sous le numéro EP 3 522 362 A1 décrit une commande d'une machine électrique à aimant permanant à plusieurs jeux d'enroulement et le brevet US publié sous le numéro US 10,006,375 B1 décrit un système de propulsion pour aéronef.

L'invention a donc pour objet un système propulsif d'aéronef du type précité, caractérisé en ce que le dispositif de commande est en outre conçu, en réponse à la détection du court-circuit, pour maintenir chaque groupe de phases sain connecté à son sous-réseau électrique.

En effet, les inventeurs ont constaté que le principal problème de déconnecter complètement le réseau électrique de la génératrice électrique en réponse à la détection d'un court-circuit, est que la génératrice électrique n'a plus de charge et ne fournit donc plus de couple freinant pour décélérer la turbine à gaz. Grâce à l'invention, le ou les groupes de phases sains restent connectés à leurs sous-réseaux respectifs ce qui permet de maintenir une charge pour la génératrice électrique et donc de freiner la turbine à gaz.

De façon optionnelle, le dispositif de commande est avantageusement conçu, après avoir maintenu un certain temps chaque groupe de phases sain connecté à son sous-réseau électrique, pour déconnecter tous les groupes de phases des sous-réseaux électriques en commandant le dispositif d'isolement associé à chaque groupe de phases sain pour déconnecter ce groupe de phases sain de son sous-réseau électrique associé.

De façon optionnelle également, le dispositif de commande est en outre conçu pour recevoir une mesure d'une vitesse de rotation de la génératrice électrique, pour détecter si une condition prédéfinie portant sur la vitesse de rotation reçue est réalisée, cette condition prédéfinie étant par exemple que la vitesse de rotation passe sous un seuil prédéfini, et, en réponse à la détection de la réalisation de la condition prédéfinie, pour réaliser l'étape de déconnexion de tous les groupes de phases des sous-réseaux électriques.

De façon optionnelle également, le dispositif de commande est conçu, en réponse à la détection du court-circuit, pour augmenter une consommation de puissance électrique d'au moins un équipement d'un sous-réseau électrique connecté à l'un du ou des groupes de phases sains.

De façon optionnelle également, un des sous-réseaux électriques comporte une batterie, et, pour augmenter la consommation de puissance électrique de la batterie, le dispositif de commande est conçu pour augmenter une tension électrique appliquée à la batterie par son sous-réseau électrique afin que la batterie se recharge.

De façon optionnelle également, pour augmenter la consommation de puissance électrique d'une batterie, le dispositif de commande est conçu pour augmenter une tension électrique appliquée à la batterie par son sous-réseau électrique afin que la batterie se recharge et/ou, pour augmenter la consommation de puissance électrique d'un moteur électrique, le dispositif de commande est conçu pour commander le moteur électrique afin d'augmenter une vitesse de rotation du moteur électrique et/ou pour commander le moteur électrique afin que le moteur électrique génère un courant réactif.

De façon optionnelle également, l'installation comporte en outre un dispositif de mise en connexion des sous-réseaux électriques et le dispositif de commande est conçu, en réponse à la détection du court-circuit, pour commander le dispositif de mise en connexion pour connecter le sous-réseau électrique associé à chaque groupe de phases défectueux au sous-réseau électrique associé à l'un du ou des groupes de phases sains.

De façon optionnelle également, l'installation comporte en outre un dispositif de charge électrique et un système de connexion conçu pour sélectivement connecter le dispositif de charge électrique à un ou plusieurs des sous-réseaux électriques et le dispositif de commande est conçu, en réponse à la détection du court-circuit, pour connecter le dispositif de charge électrique à un sous-réseau électrique associé à un groupe de phases sain.

L'invention a également pour objet un aéronef comportant une installation selon l'invention.

L'invention a également pour objet un procédé d'arrêt d'urgence d'un turbogénérateur comportant une turbine à gaz et une génératrice électrique à aimants permanents conçue pour être entraînée mécaniquement par la turbine à gaz, le procédé comportant :
- une détection d'un court-circuit dans chacun d'au moins un de groupes de phases de la génératrice électrique, les groupes de phases étant respectivement connectées à des sous-réseaux électriques d'un réseau électrique, les sous-réseaux électriques étant déconnectés électriquement les uns des autres et comportant chacun au moins un équipement électrique, chaque groupe de phases dans lequel un court-circuit est détecté étant dit défectueux et chaque autre groupe de phases étant dit sain ; et
- en réponse à la détection du court-circuit :
   - une déconnexion de chaque groupe de phases défectueux de son sous-réseau électrique associé, et
   - un arrêt de la turbine à gaz ;
caractérisé en ce qu'il comporte en outre, en réponse à la détection du court-circuit, un maintien de chaque groupe de phases sain connecté à son sous-réseau électrique.

Il est également proposé un programme d'ordinateur téléchargeable depuis un réseau de communication et/ou enregistré sur un support lisible par ordinateur, caractérisé en ce qu'il comprend des instructions pour l'exécution des étapes d'un procédé, selon l'invention, d'arrêt d'urgence d'un turbogénérateur, lorsque ledit programme est exécuté sur un ordinateur

L'invention sera mieux comprise à l'aide de la description qui va suivre, donnée uniquement à titre d'exemple et faite en se référant aux dessins annexés dans lesquels :
[Fig. 1] la figure 1 est une vue simplifiée d'une installation électromécanique d'aéronef avec un turbogénérateur, selon un mode de réalisation de l'invention,
[Fig. 2] la figure 2 est un schéma-bloc illustrant les étapes d'un procédé d'arrêt d'urgence du turbogénérateur de la figure 1, selon un mode de réalisation de l'invention,
[Fig. 3] la figure 3 est une vue similaire à celle de la figure 1, montrant une première configuration de l'installation au cours de son fonctionnement, et
[Fig. 4] la figure 4 est une vue similaire à celle de la figure 1, montrant une deuxième configuration de l'installation au cours de son fonctionnement.

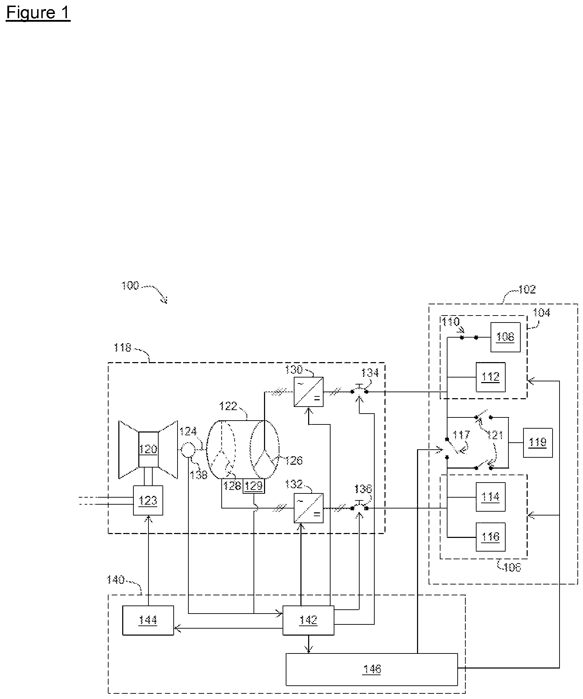

En référence à la figure 1, une installation électromécanique 100 d'aéronef, selon un mode de réalisation de l'invention, va à présent être décrite.

L'installation 100 comporte tout d'abord un réseau électrique 102 comportant des sous-réseaux électriques, deux dans l'exemple décrit, désignés par les références 104, 106. Les sous-réseaux électriques 104, 106 sont déconnectés électriquement les uns des autres et comportent chacun au moins un équipement électrique. Dans l'exemple décrit, le premier sous-réseau électrique 104 comporte une batterie 108, un dispositif 110 d'isolement de la batterie 108 et un autre équipement électrique 112, tandis que le deuxième sous-réseau électrique 106 comporte un moteur électrique 114 et un autre équipement électrique 116. Le moteur électrique 114 sert par exemple à entraîner une hélice (non représentée) de l'aéronef.

Pour permettre de connecter entre eux les sous-réseaux électriques 104, 106, l'installation 100 comporte en outre un dispositif 117 de mise en connexion des sous-réseaux.

De façon optionnelle, le réseau électrique 102 peut en outre comporter un dispositif de charge électrique 119 composé par exemple d'une ou plusieurs résistances de charge, ainsi qu'un système de connexion 121 conçu pour sélectivement connecter le dispositif de charge électrique 119 à un ou plusieurs des sous-réseaux électriques 104, 106. Le système de connexion 121 comporte par exemple des interrupteurs connectant le dispositif de charge électrique 119 respectivement à au moins certains des sous-réseaux électriques. Dans l'exemple décrit, le système de connexion 121 est conçu pour connecter le dispositif de charge électrique 119 sélectivement à tous les sous-réseaux 104, 106, et comporte pour cela deux interrupteurs respectifs.

L'installation 100 comporte en outre un turbogénérateur 118 formant un système propulsif de l'aéronef.

Le turbogénérateur 118 comporte tout d'abord une turbine à gaz 120 et une vanne 123 d'alimentation en carburant de la turbine à gaz 120.

Le turbogénérateur 118 comporte en outre une génératrice électrique 122 à aimants permanents conçue pour être entraînée mécaniquement par la turbine à gaz 120 par un arbre de rotation 124. La génératrice électrique 122 peut être associée à un système de refroidissement (non représenté), par exemple à air pulsé pour les faibles puissances (typiquement inférieures à 100 kW) et à huile pour les puissances supérieures. La génératrice électrique 122 présente des groupes de phases respectivement connectés aux sous-réseaux électriques. Ainsi, dans l'exemple d'écrit, la génératrice électrique 122 comporte deux groupes de phases 126, 128 respectivement connectés aux sous-réseaux électriques 104, 106. Chaque groupe de phases 126, 128 est porté par un stator de la génératrice électrique 122. Les phases de chaque groupe de phases 126, 128 sont par exemple organisées en étoile ou bien en triangle. Chaque phase comporte généralement un bobinage, également appelé bobine, conçu pour être parcouru par un courant de phase et pour présenter une tension de phase.

Le turbogénérateur 118 comporte en outre un système 129 de mesures de paramètres de fonctionnement de la génératrice électrique 122, tels que les courants de phase, les tensions de phase, des températures de phase et/ou une température de l'huile, dans le cas où la génératrice électrique 122 est refroidie à l'huile.

Dans l'exemple décrit, les sous-réseaux électriques 104, 106 utilisent une tension continue, dite HVDC (de l'anglais « High Voltage Direct Current »), tandis que les groupes de phases 126, 128 fournissent chacun des tensions de phase alternatives. Ainsi, le turbogénérateur 118 comporte, pour chaque groupe de phases 126, 128, un convertisseur de tension alternatif-continu 130, 132 conçu pour convertir les tensions de phase de ce groupe de phases 126, 128 en la tension HVDC du sous-réseau électrique 104, 106 associé.

Le turbogénérateur 118 comporte en outre, pour chaque groupe de phases 126, 128, un dispositif d'isolement 134, 136 conçu pour déconnecter le groupe de phases 126, 128 de son sous-réseau électrique 104, 106 associé, et ainsi isoler ce sous-réseau électrique 104, 106. Par exemple, chaque dispositif d'isolement 134, 136 comporte un contacteur électromécanique, un pyrofusible ou bien un Contrôleur de Puissance à État Solide (de l'anglais « Solid State Power Controller » ou SSPC).

Par ailleurs, le turbogénérateur 118 comporte un capteur de vitesse 138 conçu pour mesurer une vitesse de rotation de la génératrice électrique 122. Le capteur de vitesse 128 est par exemple monté sur l'arbre de rotation 124.

L'installation 100 comporte en outre un dispositif de commande 140.

Dans l'exemple décrit, le dispositif de commande 140 comporte tout d'abord une unité 142 de commande en particulier des convertisseurs de tension 130, 132, généralement appelée Unité de Commande de Génératrice (de l'anglais « Generator Control Unit » ou GCU).

Le dispositif de commande 140 comporte en outre une unité 144 de commande en particulier de la turbine à gaz 120, généralement appelée Unité de Commande Electronique du Moteur (de l'anglais « Electronic Engine Control Unit » ou EECU) ou bien Commande Numérique à Autorité Complète du Moteur (de l'anglais « Full Authority Digital Engine Control » ou FADEC).

Le dispositif de commande 140 comporte en outre une unité 146 de commande en particulier du réseau électrique 102, appelée Superviseur du système propulsif.

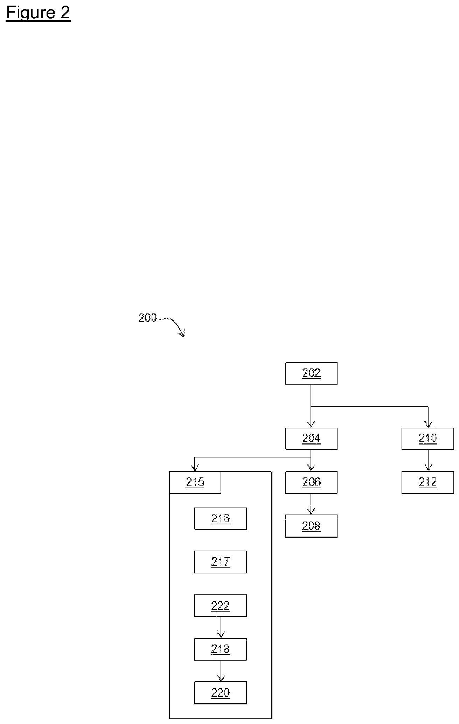

Dans l'exemple décrit, chacun des modules 142, 144, 146 du dispositif de commande 140 comporte un système informatique comportant une unité de traitement (telle qu'un microprocesseur) et une mémoire (telle qu'une mémoire principale) dans laquelle un programme d'ordinateur est destiné à être chargé, ce programme d'ordinateur contenant des instructions de programme d'ordinateur conçues pour être exécutées par l'unité de traitement. Ainsi, les fonctions mises en oeuvre par le dispositif de commande 140 qui seront décrites par la suite, en référence au procédé de la figure 2, sont implémentées dans l'exemple décrit dans le programme d'ordinateur, sous forme de briques logicielles. Dans d'autres modes de réalisation, plusieurs des modules 142, 144, 146 pourraient être regroupés dans un seul système informatique.

Alternativement, tout ou partie de ces briques logicielles pourrait être implémenté sous forme de briques matérielles, c'est-à-dire sous forme d'un circuit électronique, par exemple micro-câblé, ne faisant pas intervenir de programme d'ordinateur.

En référence à la figure 2, un procédé 200 selon un mode de réalisation de l'invention, d'arrêt d'urgence du turbogénérateur 118 va à présent être décrit.

Au cours d'une étape 202, le GCU 142 détecte un court-circuit dans au moins un des groupes de phases 126, 128. Dans la suite de la description, chaque groupe de phases 126, 128 dans lequel un court-circuit est détecté sera dit défectueux et chaque autre groupe de phases sera dit sain. En d'autres termes, chaque groupe de phases 126, 128 a le statut « sain » tant que le GCU 142 n'a pas détecté un court-circuit dans ce groupe de phases 126, 128.

Un court-circuit dans un groupe de phases 126, 128 est le plus souvent dû à un défaut d'isolant d'un ou des bobinages. Ce court-circuit a pour conséquence un accroissement important du courant électrique circulant dans les phases entraînant un échauffement des phases du stator très important localement qui peut conduire à l'initiation d'un feu, par exemple dans l'isolant électrique et/ou thermique, et/ou à l'inflammation de l'huile dans le cas où la génératrice électrique 122 est refroidie à l'huile. En outre, le risque de court-circuit étant généralement constant par groupe de phases, plus il y de groupes de phases plus le risque global est important.

Dans un mode de réalisation pratique, le GCU 142 détecte un court-circuit à partir des mesures des courants de phase, des tensions de phase et/ou des températures de phase. Le GCU 142 peut en outre tenir compte de la mesure de la température de l'huile afin d'éviter des fausses détections de court-circuit (lorsque la mesure de température de l'huile ne révèle pas un échauffement anormal de l'huile).

En réponse à la détection du court-circuit, les étapes suivantes sont mises en oeuvre.

Au cours d'une étape 204, le GCU 142 commande le dispositif d'isolement associé à chaque groupe de phases défectueux pour déconnecter ce groupe de phases défectueux de son sous-réseau électrique associé. Ce sous-réseau électrique devient ainsi isolé du groupe de phases défectueux. En outre, le GCU 142 maintient chaque groupe de phases sain connecté à son sous-réseau électrique, en laissant chaque autre dispositif d'isolement passant (état fermé).

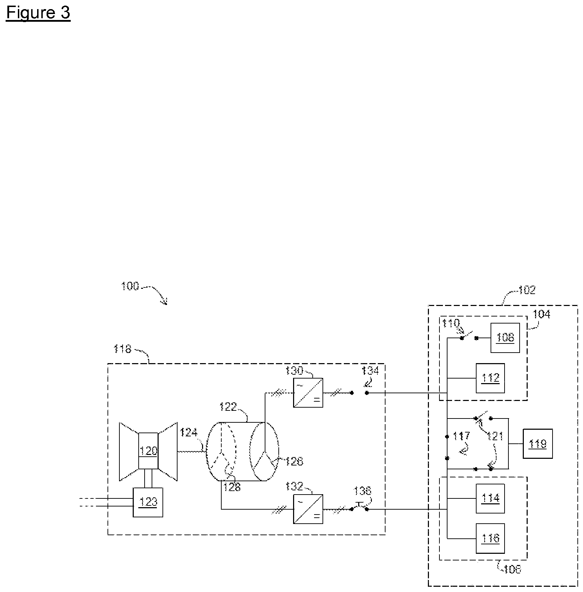

Par exemple, si dans l'installation illustrée à la figure 1, le GCU 142 détecte un court-circuit dans le groupe de phase 126, on obtient la situation suivante illustrée à la figure 3 : le dispositif d'isolement 134 est activé à l'état ouvert (état isolant) pour isoler le sous-réseau électrique 104 du groupe de phases 126 défectueux tandis que le dispositif d'isolement 136 est laissé à l'état fermé pour maintenir le groupe de phase 128 sain connecté à son sous-réseau électrique 106.

De retour à la figure 2, au cours d'une étape 206, le GCU 142 surveille la mesure de la vitesse de rotation de la génératrice électrique 122 fournie par le capteur 138, pour détecter lorsque la vitesse de rotation est suffisamment faible pour déconnecter complètement la génératrice électrique 122 du réseau électrique 102. Pour cela, le GCU 142 détecte par exemple si une condition prédéfinie portant sur la vitesse de rotation reçue est réalisée. Cette condition prédéfinie est par exemple que la vitesse de rotation passe sous un seuil prédéfini ou bien qu'elle devient nulle.

Au cours d'une étape 208, après avoir maintenu un certain temps chaque groupe de phases sain connecté à son sous-réseau électrique associé, le GCU 142 déconnecte tous les groupes de phases 126, 128 des sous-réseaux électriques 104, 106 en commandant le dispositif d'isolement associé à chaque groupe de phases sain pour déconnecter ce groupe de phases sain de son sous-réseau électrique associé.

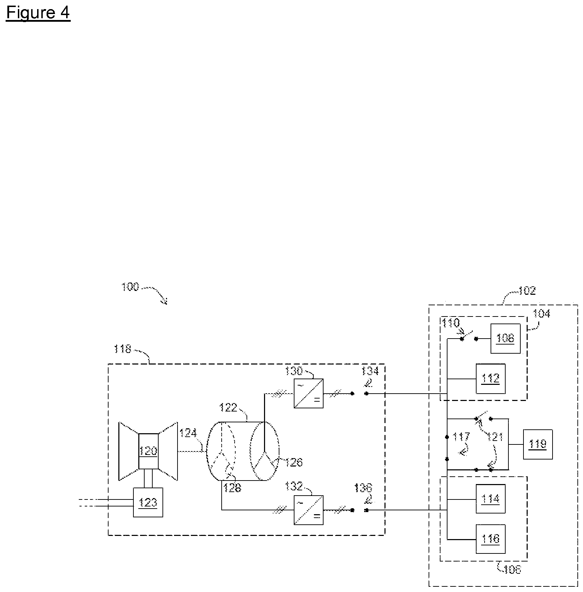

Par exemple, si on considère la situation de la figure 3 dans laquelle le groupe de phases 126 défectueux avait été isolé du sous-réseau électrique 104 à l'étape 204, le GCU 142 déconnecte à l'étape 208 le groupe de phases 128 sain en commandant le dispositif d'isolement 136 à l'état ouvert (état isolant), comme illustré sur la figure 4.

Ainsi, dans l'exemple décrit, le temps durant lequel chaque groupe de phases sain est maintenu connecté à son sous-réseau électrique correspond au temps que la vitesse de rotation de la génératrice électrique 122 met pour atteindre la condition prédéfinie. Alternativement, l'étape 206 pourrait être omise et le temps de maintien pourrait être un temps fixe et prédéfini.

De retour à la figure 2, parallèlement aux étapes 204 à 208, au cours d'une étape 210, le GCU 142 envoie une demande d'arrêt d'urgence au FADEC 144.

Au cours d'une étape 212, en réponse à la demande d'arrêt d'urgence, le FADEC 144 commande un arrêt de la turbine à gaz 120. Pour cela, dans l'exemple décrit, le FADEC 144 commande la fermeture de la vanne 123 d'alimentation en carburant.

Dans l'exemple décrit, suite à l'étape 204 d'isolation d'un ou plusieurs des sous-réseaux électriques 104, 106, le réseau électrique 102 est modifié, au cours d'une étape 215, pour que la puissance électrique qu'il prélève à la génératrice électrique 122 augmente.

L'étape 215 comporte par exemple une ou plusieurs parmi les étapes 216, 217 218 qui vont à présent être décrites.

Au cours de l'étape 216, le Superviseur 146 (par exemple en réponse à une demande d'arrêt d'urgence de la part du GCU) et/ou le GCU 142 fait augmenter la charge électrique d'au moins un équipement d'un sous-réseau électrique associé à un groupe de phases sain, afin d'augmenter la puissance électrique prélevée par le réseau électrique 102 à la génératrice électrique 122. Ainsi, si le ou les groupes de phases sains ne sont pas totalement chargés avant la procédure d'arrêt d'urgence, l'étape 216 a pour effet de les charger plus pour freiner davantage la génératrice électrique 122.

Par exemple, pour augmenter la charge électrique de la batterie 108, le GCU 142 augmente la tension HVDC du sous-réseau électrique 104 auquel appartient la batterie 108, de manière à ce que la tension HVDC devienne suffisamment supérieure à celle de la batterie 108 pour lui imposer un courant de recharge important. Cette augmentation de tension est par exemple réalisée en commandant de manière appropriée le convertisseur de tension 130 du sous-réseau électrique 104 auquel appartient la batterie 108. L'augmentation de tension 130 est de préférence calculée par le GCU 142 pour que le courant de recharge reste dans les limites de fonctionnement de la batterie 108 en particulier inférieur à un courant de recharge maximum admissible, et pour respecter un niveau de charge maximum de la batterie 108.

Toujours par exemple, pour augmenter la charge électrique du moteur électrique 114, le Superviseur 146 commande le moteur électrique 114 afin d'augmenter sa vitesse de rotation. Alternativement, le Superviseur 146 commande le moteur électrique afin qu'il génère un courant réactif. En effet, ce courant réactif génère un échauffement du moteur électrique 114 sans modifier sa vitesse de rotation. La puissance électrique supplémentaire consommée par le moteur électrique 114 est ainsi dissipée sous forme de chaleur dans le moteur électrique 114. Il sera apprécié que, dans un autre mode de réalisation, la génération du courant réactif pourrait être réalisée en complément de l'augmentation de la vitesse de rotation.

Au cours de l'étape 217, le dispositif de charge électrique 119 est utilisé, par exemple dans le cas où le ou les groupes de phases sains sont déjà chargés au maximum, notamment si par exemple la batterie 108 est déjà chargée au maximum et que l'on ne souhaite pas modifier la charge du moteur électrique 114 pour ne pas modifier l'aérodynamisme du vol. Le système de connexion 119 est ainsi commandé par le dispositif de commande 140 pour connecter le dispositif de charge électrique 119 à au moins un sous-réseau électrique associé à un groupe de phases sain afin d'augmenter la puissance électrique prélevée par ce sous-réseau électrique.

Dans l'exemple de la figure 3, le système de connexion 121 est commandé au cours de l'étape 217 pour connecter le dispositif de charge électrique 119 au sous-réseau électrique 106 associé au groupe de phases 128 sain.

De retour à la figure 2, au cours de l'étape 218, au moins un sous-réseau électrique isolé à l'étape 204 est utilisé pour augmenter la puissance électrique prélevée à la génératrice électrique 122. Pour cela, le Superviseur 146 commande le dispositif de mise en connexion 117 pour connecter ce sous-réseau électrique isolé au sous-réseau électrique associé à un groupe de phases sain. Ainsi, le sous-réseau électrique isolé est connecté à la génératrice électrique 122 au travers du groupe de phases sain et peut ainsi prélever de la puissance électrique à la génératrice électrique 122.

Dans l'exemple de la figure 3, le dispositif de mise en connexion 117 connecte le sous-réseau électrique 104 isolé à la génératrice électrique 122 à travers le sous-réseau électrique 106, pour pouvoir lui prélever de la puissance électrique.

De retour à la figure 2, au cours d'une étape 220 optionnelle, la charge électrique des équipements du sous-réseau électrique auparavant isolé peut alors être augmentée, par exemple de la même manière que celle décrite à l'étape 216.

Dans l'exemple de la figure 3, la charge électrique des équipements 112, 108 du sous-réseau électrique 104 est par exemple augmentée lors de cette étape 220.

Il peut être nécessaire de prendre des précautions lors du basculement des équipements d'un groupe de phases 126, 128 à l'autre, en particulier pour la batterie 108. Ainsi, de préférence, le procédé 200 comporte en outre une étape 222 préalable à l'étape 218, au cours de laquelle le Superviseur 146 commande le dispositif d'isolement 110 de la batterie 108 pour isoler la batterie 108 du reste du sous-réseau électrique 104. Ainsi, le ou les équipements 112 autres que la batterie 108 peuvent être utilisés pour augmenter la puissance électrique prélevée à la génératrice électrique 122.

Alternativement, le dispositif d'isolement 110 peut être remplacé par un dispositif d'accommodation, ce qui permet d'utiliser la batterie 108 pour augmenter la puissance électrique prélevée à la génératrice électrique 122.

Le dispositif d'accommodation comporte par exemple une résistance de précharge qui limite le courant électrique de la batterie 108 le temps que les tensions de la batterie 108 et du sous-réseau électrique 104 s'égalisent. Cette résistance de précharge est connectée temporairement au moment de la connexion du sous-réseau électrique 104 au sous-réseau électrique 106, puis déconnectée lorsque les tensions sont égalisées.

Alternativement, le dispositif d'accommodation comporte par exemple un convertisseur de tension continu-continu qui réalise l'adaptation de tension entre la batterie 108 et le sous-réseau électrique 104. Dans ce cas, le convertisseur de tension est généralement présent et actif en permanence.

Il apparaît clairement qu'une installation et un procédé tels que ceux décrits précédemment permettent d'arrêter la génératrice électrique dans un temps court.

On notera par ailleurs que l'invention n'est pas limitée aux modes de réalisation décrits précédemment. Il apparaîtra en effet à l'homme de l'art que diverses modifications peuvent être apportées aux modes de réalisation décrits cidessus, à la lumière de l'enseignement qui vient de lui être divulgué.

En particulier, la génératrice électrique pourrait comporter plus de deux groupes de phases, connectés à autant de sous-réseaux électriques.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Installation (100) électromécanique d'aéronef, comportant :
- un réseau électrique (102) comportant des sous-réseaux électriques (104, 106) déconnectés électriquement les uns des autres et comportant chacun au moins un équipement électrique (108,112, 114, 116) ;
- un turbogénérateur (118) comportant :
• une turbine à gaz (120),
• une génératrice électrique (122) à aimants permanents conçue pour être entraînée mécaniquement par la turbine à gaz (120) et présentant des groupes de phases (126, 128) respectivement connectées aux sous-réseaux électriques (104, 106), et
• pour chaque groupe de phase (126, 128), un dispositif d'isolement (134, 136) conçu pour déconnecter le groupe de phases (126, 128) de son sous-réseau électrique (104, 106) associé ;
- un dispositif de commande (140) conçu pour détecter un court-circuit dans au moins un des groupes de phases, chaque groupe de phases dans lequel un court-circuit est détecté étant dit défectueux et chaque autre groupe de phases étant dit sain, et, en réponse à la détection du court-circuit, d'une part, pour commander le dispositif d'isolement (134, 136) associé à chaque groupe de phases (126, 128) défectueux pour déconnecter ce groupe de phases (126, 128) défectueux de son sous-réseau électrique (104, 106) associé et, d'autre part, pour commander un arrêt de la turbine à gaz (120) ;
**caractérisé en ce que** le dispositif de commande (140) est en outre conçu, en réponse à la détection du court-circuit, pour maintenir chaque groupe de phases (126, 128) sain connecté à son sous-réseau électrique (104, 106).

2. Installation (100) selon la revendication 1, dans laquelle le dispositif de commande (140) est conçu, après avoir maintenu un certain temps chaque groupe de phases (126, 128) sain connecté à son sous-réseau électrique (104, 106), pour déconnecter tous les groupes de phases (126, 128) des sous-réseaux électriques (104, 106) en commandant le dispositif d'isolement (134, 136) associé à chaque groupe de phases (126, 128) sain pour déconnecter ce groupe de phases (126, 128) sain de son sous-réseau électrique (104, 106) associé.

3. Installation (100) selon la revendication 2, dans laquelle le dispositif de commande (140) est conçu pour recevoir une mesure d'une vitesse de rotation de la génératrice électrique (122), pour détecter si une condition prédéfinie portant sur la vitesse de rotation reçue est réalisée, cette condition prédéfinie étant par exemple que la vitesse de rotation passe sous un seuil prédéfini, et, en réponse à la détection de la réalisation de la condition prédéfinie, pour réaliser l'étape de déconnexion de tous les groupes de phases (126, 128) des sous-réseaux électriques (104, 106).

4. Installation (100) selon l'une quelconque des revendications 1 à 3, dans laquelle le dispositif de commande (140) est conçu, en réponse à la détection du court-circuit, pour augmenter une consommation de puissance électrique d'au moins un équipement (108, 112, 114, 116) d'un sous-réseau électrique (104, 106) connecté à l'un du ou des groupes de phases (126, 128) sains.

5. Installation (100) selon la revendication 4, dans laquelle, pour augmenter la consommation de puissance électrique d'une batterie (108), le dispositif de commande (140) est conçu pour augmenter une tension électrique appliquée à la batterie (108) par son sous-réseau électrique (104) afin que la batterie (108) se recharge et/ou, pour augmenter la consommation de puissance électrique d'un moteur électrique (116), le dispositif de commande (140) est conçu pour commander le moteur électrique (116) afin d'augmenter une vitesse de rotation du moteur électrique (116) et/ou pour commander le moteur électrique (116) afin que le moteur électrique (116) génère un courant réactif.

6. Installation (100) selon l'une quelconque des revendications 1 à 5, comportant en outre un dispositif (117) de mise en connexion des sous-réseaux électriques (104, 106) et dans laquelle le dispositif de commande (140) est conçu, en réponse à la détection du court-circuit, pour commander le dispositif de mise en connexion (117) pour connecter le sous-réseau électrique (104, 106) associé à chaque groupe de phases (126, 128) défectueux au sous-réseau électrique (104, 106) associé à l'un du ou des groupes de phases (126, 128) sains.

7. Installation (100) selon l'une quelconque des revendications 1 à 6, comportant en outre un dispositif de charge électrique (119) et un système de connexion (121) conçu pour sélectivement connecter le dispositif de charge électrique (119) à un ou plusieurs des sous-réseaux électriques (104, 106) et dans laquelle le dispositif de commande (140) est conçu, en réponse à la détection du court-circuit, pour connecter le dispositif de charge électrique (119) à un sous-réseau électrique (106) associé à un groupe de phases (128) sain.

8. Aéronef comportant une installation (100) selon l'une quelconque des revendications 1 à 7.

9. Procédé (200) d'arrêt d'urgence d'un turbogénérateur (118) comportant une turbine à gaz (120) et une génératrice électrique (122) à aimants permanents conçue pour être entraînée mécaniquement par la turbine à gaz (120), le procédé (200) comportant :
- une détection (202) d'un court-circuit dans chacun d'au moins un de groupes de phases (126, 128) de la génératrice électrique (122), les groupes de phases (126, 128) étant respectivement connectées à des sous-réseaux électriques (104, 106) d'un réseau électrique (102), les sous-réseaux électriques (104, 106) étant déconnectés électriquement les uns des autres et comportant chacun au moins un équipement électrique (108, 112, 114, 116), chaque groupe de phases (126, 128) dans lequel un court-circuit est détecté étant dit défectueux et chaque autre groupe de phases (126, 128) étant dit sain ; et
- en réponse à la détection du court-circuit :
• une déconnexion (204) de chaque groupe de phases (126, 128) défectueux de son sous-réseau électrique (104, 106) associé, et
• un arrêt (212) de la turbine à gaz ;
**caractérisé en ce qu'**il comporte en outre, en réponse à la détection du court-circuit, un maintien (204) de chaque groupe de phases (126, 128) sain connecté à son sous-réseau électrique (104, 106).

10. Programme d'ordinateur téléchargeable depuis un réseau de communication et/ou enregistré sur un support lisible par ordinateur, **caractérisé en ce qu'**il comprend des instructions pour l'exécution des étapes d'un procédé (200) d'arrêt d'urgence d'un turbogénérateur (118), selon la revendication 9, lorsque ledit programme est exécuté sur un ordinateur.

## Patentansprüche

1. Elektromechanische Installation (100) für ein Flugzeug, umfassend:
- ein Stromnetz (102), das Teilstromnetze (104, 106) umfasst, die elektrisch voneinander gelöst sind und jeweils mindestens eine elektrische Ausrüstung (108, 112, 114, 116) umfassen;
- einen Turbogenerator (118), umfassend:
- eine Gasturbine (120),
- einen Stromgenerator (122) mit Permanentmagneten, der dazu ausgelegt ist, von der Gasturbine (120) mechanisch angetrieben zu werden und Phasengruppen (126, 128) aufweist, die jeweils mit den Teilstromnetzen (104, 106) verbunden sind, und
- für jede Phasengruppe (126, 128), eine Isoliervorrichtung (134, 136), die dazu ausgelegt ist, die Phasengruppe (126, 128) von ihrem zugehörigen Teilstromnetz (104, 106) zu lösen;
- eine Steuervorrichtung (140), die dazu ausgelegt ist, einen Kurzschluss in mindestens einer der Phasengruppen zu erfassen, wobei jede Phasengruppe, bei der ein Kurzschluss erfasst wird, als fehlerhaft bezeichnet wird, und jede andere Phasengruppe als einwandfrei bezeichnet wird, und, als Reaktion auf die Erfassung des Kurzschlusses, einerseits die zu jeder fehlerhaften Phasengruppe (126, 128) zugehörige Isoliervorrichtung (134, 136) zu steuern, um diese fehlerhafte Phasengruppe (126, 128) von ihrem zugehörigen Teilstromnetz (104, 106) zu lösen, und andererseits ein Anhalten der Gasturbine (120) zu steuern;
**dadurch gekennzeichnet, dass** die Steuervorrichtung (140) weiter dazu ausgelegt ist, als Reaktion auf die Erfassung des Kurzschlusses, die Verbindung jeder einwandfreien Phasengruppe (126, 128) mit ihrem Teilstromnetz (104, 106) aufrechtzuerhalten.

2. Installation (100) nach Anspruch 1, wobei die Steuervorrichtung (140) dazu ausgelegt ist, nachdem sie die Verbindung jeder einwandfreien Phasengruppe (126, 128) eine gewisse Zeit mit ihrem Teilstromnetz (104, 106) aufrechterhalten hat, alle Phasengruppen (126, 128) von den Teilstromnetzen (104, 106) zu lösen, indem sie die zu jeder einwandfreien Phasengruppe (126, 128) zugehörige Isoliervorrichtung (134, 136) steuert, um diese einwandfreie Phasengruppe (126, 128) von ihrem zugehörigen Teilstromnetz (104, 106) zu lösen.

3. Installation (100) nach Anspruch 2, wobei die Steuervorrichtung (140) dazu ausgelegt ist, eine Messung einer Drehgeschwindigkeit des Stromgenerators (122) zu empfangen, um zu erfassen, ob eine vordefinierte Bedingung bezüglich der empfangenen Drehgeschwindigkeit realisiert ist, wobei diese vorbestimmte Bedingung beispielsweise ist, dass die Drehgeschwindigkeit unter eine vordefinierte Schwelle fällt, und, als Reaktion auf die Realisierung der vorbestimmten Bedingung, den Schritt des Lösens aller Phasengruppen (126, 128) von den Teilstromnetzen (104, 106) zu realisieren.

4. Installation (100) nach einem der Ansprüche 1 bis 3, wobei die Steuervorrichtung (140) dazu ausgelegt ist, als Reaktion auf die Erfassung des Kurzschlusses einen Verbrauch an elektrischer Leistung mindestens einer Ausrüstung (108, 112, 114, 116) eines Teilstromnetzes (104, 106), das mit der einen von der oder den einwandfreien Phasengruppen (126, 128) verbunden ist, zu erhöhen.

5. Installation (100) nach Anspruch 4, wobei die Steuervorrichtung (140) zum Erhöhen des Verbrauchs an elektrischer Leistung einer Batterie (108) dazu ausgelegt ist, eine an der Batterie (108) durch ihr Teilstromnetz (104) angelegte elektrische Spannung zu erhöhen, damit die Batterie (108) sich aufladen kann, und/oder die Steuervorrichtung (140) zum Erhöhen des Verbrauchs an elektrischer Leistung eines elektrischen Motors (116) dazu ausgelegt ist, den elektrischen Motor (116) zu steuern, um eine Drehgeschwindigkeit des elektrischen Motors (116) zu erhöhen, und/oder den elektrischen Motor (116) zu steuern, damit der elektrische Motor (116) einen Blindstrom erzeugt.

6. Installation (100) nach einem der Ansprüche 1 bis 5, weiter eine Vorrichtung (117) zum Verbindungsaufbau der Teilstromnetze (104, 106) umfassend, und wobei die Steuervorrichtung (140) dazu ausgelegt ist, als Reaktion auf die Erfassung des Kurzschlusses, die Vorrichtung zum Verbindungsaufbau (117) zu steuern, um das zu jeder fehlerhaften Phasengruppe (126, 128) zugehörige Teilstromnetz (104, 106) mit dem zu der einen von der oder den einwandfreien Phasengruppen (126, 128) zugehörigen Teilstromnetz (104, 106) zu verbinden.

7. Installation (100) nach einem der Ansprüche 1 bis 6, weiter eine Vorrichtung zur elektrischen Aufladung (119) und ein Verbindungssystem (121) umfassend, das dazu ausgelegt ist, die Vorrichtung zur elektrischen Aufladung (119) selektiv mit einem oder mehreren der Teilstromnetze (104, 106) zu verbinden, und wobei die Steuervorrichtung (140) dazu ausgelegt ist, als Reaktion auf die Erfassung des Kurzschlusses, die Vorrichtung zur elektrischen Aufladung (119) mit einem zu einer einwandfreien Phasengruppe (128) zugehörigen Teilstromnetz (106) zu verbinden.

8. Flugzeug, umfassend eine Installation (100) nach einem der Ansprüche 1 bis 7.

9. Verfahren (200) zum Nothalten eines Turbogenerators (118), der eine Gasturbine (120) und einen Stromgenerator (122) mit Permanentmagneten umfasst, der dazu ausgelegt ist, von der Gasturbine (120) mechanisch angetrieben zu werden, wobei das Verfahren (200) umfasst:
- eine Erfassung (202) eines Kurzschlusses in jeder von mindestens einer von Phasengruppen (126, 128) des Stromgenerators (122), wobei die Phasengruppen (126, 128) jeweils mit Teilstromnetzen (104, 106) eines Stromnetzes (102) verbunden sind, wobei die Teilstromnetze (104, 106) elektrisch voneinander gelöst sind und jeweils mindestens eine elektrische Ausrüstung (108, 112, 114, 116) umfassen, wobei jede Phasengruppe (126, 128), bei der ein Kurzschluss erfasst wird, als fehlerhaft bezeichnet wird, und jede andere Phasengruppe (126, 128) als einwandfrei bezeichnet wird, und
- als Reaktion auf die Erfassung des Kurzschlusses:
- eine Lösung (204) jeder fehlerhaften Phasengruppe (126, 128) von ihrem zugehörigen Teilstromnetz (104, 106), und
- ein Anhalten (212) der Gasturbine;
**dadurch gekennzeichnet, dass** es weiter als Reaktion auf die Erfassung des Kurzschlusses ein Aufrechterhalten (204) der Verbindung jeder einwandfreien Phasengruppe (126, 128) mit ihrem Teilstromnetz (104, 106) umfasst.

10. Computerprogramm, das von einem Kommunikationsnetz aus herunterladbar ist und/oder auf einem computerlesbaren Träger gespeichert ist, **dadurch gekennzeichnet, dass** es Anweisungen für die Ausführung der Schritte eines Verfahrens (200) zum Nothalten eines Turbogenerators (118) nach Anspruch 9, wenn das Programm auf einem Computer ausgeführt wird, umfasst

## Claims

1. An electromechanical installation (100) for an aircraft, comprising:
- an electrical network (102) comprising electrical sub-networks (104, 106) electrically disconnected from each other and each comprising at least one electrical equipment (108, 112, 114, 116);
• a turbogenerator (118) comprising:
• a gas turbine (120),
• a permanent magnet electrical generator (122) designed to be mechanically driven by the gas turbine (120) and having phase groups (126, 128) respectively connected to the electrical sub-networks (104, 106), and
• for each phase group (126, 128), an isolation device (134, 136) adapted to disconnect the phase group (126, 128) from its associated electrical sub-network (104, 106);
- a control device (140) adapted to detect a short-circuit in at least one of the phase groups, each phase group in which a short-circuit is detected being referred to as defective and each other phase group being referred to as healthy, and, in response to the detection of the short-circuit, on the one hand, to control the isolation device (134, 136) associated with each defective phase group (126, 128) to disconnect that defective phase group (126, 128) from its associated electrical sub-network (104, 106) and, on the other hand, to control a shutdown of the gas turbine (120);
**characterised in that** the control device (140) is further designed, in response to the detection of the short-circuit, to keep each healthy phase group (126, 128) connected to its electrical sub-network (104, 106).

2. The installation (100) of claim 1, wherein the control device (140) is designed, after keeping each healthy phase group (126, 128) connected to its electrical sub-network (104, 106) for a period of time, to disconnect all the phase groups (126, 128) from the electrical sub-networks (104, 106) by controlling the isolation device (134, 136) associated with each healthy phase group (126, 128) to disconnect that healthy phase group (126, 128) from its associated electrical sub-network (104, 106).

3. The installation (100) according to claim 2, wherein the control device (140) is designed to receive a measurement of a rotational speed of the electrical generator (122), to detect whether a predefined condition relating to the received rotational speed is achieved, this predefined condition being for example that the rotational speed falls below a predefined threshold, and, in response to the detection of the achievement of the predefined condition, to carry out the step of disconnecting all phase groups (126, 128) of the electrical sub-networks (104, 106).

4. The installation (100) according to any one of claims 1 to 3, wherein the control device (140) is designed, in response to the detection of the short-circuit, to increase an electrical power consumption of at least one equipment (108, 112, 114, 116) of an electrical sub-network (104, 106) connected to one of the healthy phase group or groups (126, 128).

5. The installation (100) according to claim 4, wherein, to increase electrical power consumption of a battery (108), the control device (140) is designed to increase an electrical voltage applied to the battery (108) by its electrical sub-network (104) so that the battery (108) recharges and/or, to increase the electrical power consumption of an electric motor (116), the control device (140) is designed to control the electric motor (116) in order to increase a rotational speed of the electric motor (116) and/or to control the electric motor (116) in order to cause the electric motor (116) to generate a reactive current.

6. The installation (100) according to any one of claims 1 to 5, further comprising a device (117) for connecting the electrical sub-networks (104, 106) and wherein the control device (140) is designed, in response to the detection of the short-circuit, to control the connection device (117) to connect the electrical sub-network (104, 106) associated with each defective phase group (126, 128) to the electrical sub-network (104, 106) associated with one of the healthy phase group or groups (126, 128).

7. The installation (100) according to any one of claims 1 to 6, further comprising an electrical charging device (119) and a connection system (121) designed to selectively connect the electrical charging device (119) to one or more of the electrical sub-networks (104, 106) and wherein the control device (140) is designed, in response to the detection of the short-circuit, to connect the electrical charging device (119) to an electrical sub-network (106) associated with a healthy phase group (128).

8. An aircraft comprising an installation (100) according to any of claims 1 to 7.

9. A method (200) for emergency shutdown of a turbogenerator (118) comprising a gas turbine (120) and a permanent magnet electrical generator (122) designed to be mechanically driven by the gas turbine (120), the method (200) comprising:
- a detection (202) of a short-circuit in each of at least one of the phase groups (126, 128) of the electrical generator (122), the phase groups (126, 128) being respectively connected to electrical sub-networks (104, 106) of an electrical network (102), the electrical sub-networks (104,106) being electrically disconnected from each other and each comprising at least one electrical equipment (108, 112, 114, 116), each phase group (126, 128) in which a short-circuit is detected being referred to as defective and each other phase group (126, 128) being referred to as healthy; and
- in response to the detection of the short-circuit:
• a disconnection (204) of each defective phase group (126, 128) from its associated electrical sub-network (104, 106), and
• a shutdown (212) of the gas turbine;
**characterised in that** it further comprises, in response to the detection of the short-circuit, keeping (204) of each healthy phase group (126, 128) connected to its electrical sub-network (104, 106).

10. A computer program downloadable from a communication network and/or stored on a computer-readable medium, **characterised in that** it comprises instructions for executing the steps of a method (200) for emergency shutdown of a turbogenerator (118), according to claim 9, when said program is executed on a computer.
